# EUROPEAN PATENT APPLICATION

(11) **EP 3 358 855 A1**
(43) Date of publication of application: **08.08.2018**
(21) Application number: 16850994.1
(22) Date of filing: 29.08.2016
(51) Int. Cl.: H04R 1/24, G01S 7/521, G01S 15/87, G08B 13/16, G08B 21/00, H04R 1/32, H04R 1/40

(54) **ULTRASONIC INPUT/OUTPUT ELEMENT**

(30) Priority: 30.09.2015 JP 2015193964
(71) Applicant: Aisin Seiki Kabushiki Kaisha, Kariya-shi, Aichi 448-8650 (JP)
(72) Inventor: SUGAE, Ippei, Kariya-shi Aichi 448-8650 (JP); IEDA, Kiyokazu, Kariya-shi Aichi 448-8650 (JP)
(74) Representative: Cabinet Beau de Loménie
(86) International application number: PCT/JP2016/075188
(87) International publication number: WO 2017/056818

(57) **Abstract**

A ultrasonic wave input/output device configured to detect a person approaching a vehicle or a building and to effect informing to the approaching person includes at least two oscillation sections including a first oscillation section configured to output a ultrasonic wave having a first frequency and to obtain a reflected wave corresponding to the outputted ultrasonic wave and a second oscillation section configured to output a ultrasonic wave having a second frequency different from the first frequency and to obtain a reflected wave corresponding to the outputted ultrasonic wave having the second frequency, cases 30 accommodating the first and second oscillation sections individually therein, and a single housing that houses the respective cases with a cushioning member therebetween.

## Description

### TECHNICAL FIELD

This disclosure relates to a ultrasonic wave input/output device configured to output a ultrasonic wave and to obtain a reflected wave corresponding to the outputted ultrasonic wave.

### BACKGROUND ART

Conventionally, there has been utilized a technique for detecting an object present in the surrounding of a vehicle, a house, etc., with using an oscillatory wave such as a ultrasonic wave. Examples of such technique are disclosed in Patent Document 1 and Patent Document 2.

A security apparatus disclosed in Patent Document 1 includes a ultrasonic wave transmitter disposed adjacent a rearview mirror provided upwardly of front seats of a vehicle, the transmitter being configured to transmit a ultrasonic wave in a direction of a driver's seat and a direction of a passenger's seat. The reflected wave of the transmitted ultrasonic wave is received by a ultrasonic wave receiver for detection of abnormality. An audio signal received by the ultrasonic wave receiver is outputted to the outside by a sound outputting means. Further, Patent Document 2 discloses a clock with a speaker, which is configured such that a windshield is vibrated with use of a piezoelectric element to generate a sonic wave, which may be heard by a user of the clock.

### PRIOR ART DOCUMENTS

### Patent Documents

Patent Document 1: Japanese Unexamined Patent Application Publication No. 2007-265124
Patent Document 2: Japanese Unexamined Patent Application Publication No. 2005-221445

### SUMMARY OF THE INVENTION

The security apparatus disclosed in Patent Document 1 is mounted in a vehicle, so that upon detection of an intruder into the vehicle cabin based on the reflected wave, an alarm will be generated from a vehicle horn or a siren. Thus, this security apparatus does not allow alarming prior to actual intrusion of a subject as an intruder into the vehicle cabin.

Further, in the technique disclosed in Patent Document 2, a sound is outputted by vibration of the piezoelectric element. Namely, this technique comprises simply utilization of a piezoelectric element as a speaker, thus being not applicable to detection of an intruder into a vehicle or a building.

In view of the above, there is a need for a ultrasonic wave input/output device capable of detecting a subject (a person) approaching a vehicle or a building and informing to this approaching person.

### SOLUTION

According to a characterizing feature of a ultrasonic wave input/output device relating to the present disclosure, the device comprises:
at least two oscillation sections including a first oscillation section configured to output a ultrasonic wave having a first frequency and to obtain a reflected wave corresponding to the outputted ultrasonic wave and a second oscillation section configured to output a ultrasonic wave having a second frequency different from the first frequency and to obtain a reflected wave corresponding to the outputted ultrasonic wave having the second frequency;
cases accommodating the first and second oscillation sections individually therein; and
a single housing that houses the respective cases with a cushioning member therebetween.

The "ultrasonic wave" as used herein refers to any oscillatory wave having a frequency higher than the audible frequency range (from about 20 Hz to about 20 kHz). Such ultrasonic wave, like any other oscillatory wave propagating in the air, has the characteristics that its attenuation rate progressively increases in accordance with increase of its frequency, thus a shorter reaching distance. Therefore, with the above arrangement, the ultrasonic wave having the lower frequency of the first and second frequencies can reach a long distance more easily than the ultrasonic wave having the higher frequency. On the other hand, the ultrasonic wave is diffused considerably in the direction perpendicular to its propagating direction. This diffusion becomes more conspicuous in the case of lower frequency. Conversely, a higher frequency provides better directivity. For this reason, one of the first and second oscillation sections which one outputs the lower frequency ultrasonic wave than the other provides a wider detection area than the other. Thus, advantageously, one of the first and second oscillation sections can be used for detection of an object in a wide area and the other of the first and second oscillation sections providing the narrow detection area can be used for search for more detailed position identification of the object within the wide area. Moreover, optionally, for an object whose position has been identified, the other of the first and second oscillation sections can be used for outputting a sound/voice or an alarm in a spot (localized) manner and/or the one of the first and second oscillation sections can be used for outputting a sound/voice message or an alarm in a wider area than the other. In these ways, with the above-described arrangement, it is possible to realize a ultrasonic wave input/output device capable of detecting a subject (a person) approaching a vehicle or a building and issuing a message (or an alarm) to this approaching person.

Preferably, the oscillation sections and the cases respectively have annular shapes and are arranged coaxially and in succession from radially inward to outward side in the order of descending frequency for the frequencies of the ultrasonic waves outputted from the respective oscillation sections.

With the above-described arrangement, it is possible to make a distance from the first oscillation section to an object equal to a distance from the second oscillation section to this object. Therefore, even if the ultrasonic wave input/output device is mounted with certain rotational displacements in the pan (horizontal) direction, the tilt (vertical) direction and the roll (axial) direction, such rotational displacements can be ignored (considered negligible) for the purpose of object detection and sound output. Accordingly, mounting of the ultrasonic wave input/output device can be carried out easily.

Preferably, the device includes a plurality of the housings each accommodating the oscillation sections and the cases, and the plurality of housings are arranged in the form of an array.

With the above-described arrangement, it is possible to control the directivities of the ultrasonic waves by providing a phase difference between the ultrasonic waves having a same frequency outputted from the oscillation sections provided in housings adjacent each other for obtaining mutual interference therebetween. On the other hand, for informing to an object (a subject), it is possible to improve the directivity of the ultrasonic wave and to increase the volume of the informing (or alarming) sound or voice.

Further, preferably, the device is mounted to a vehicle via the housing so that the ultrasonic waves outputted from the oscillation sections may be outputted to the periphery of the vehicle.

With the above-described arrangement, it is possible to detect a subject (person) approaching the vehicle and to inform this subject (person) in a spot manner.

### BRIEF DESCRIPTION OF THE DRAWINGS

[Fig. 1] is a perspective view of a ultrasonic wave input/output device according to a first embodiment,
[Fig. 2] is a side view in section of the ultrasonic wave input/output device according to the first embodiment,
[Fig. 3] is an exploded perspective of the ultrasonic wave input/output device according to the first embodiment,
[Fig. 4] is a view showing an example of mounting of the ultrasonic wave input/output device, and
[Fig. 5] is a side view in section of a ultrasonic wave input/output device according to a second embodiment.

### EMBODIMENTS

A ultrasonic wave input/output device relating to the present invention is configured with a function of detecting a subject (a person) approaching a vehicle or a building and of informing such approaching subject (person). Next, a ultrasonic wave input/output device 1 according to this embodiment will be explained.

### 1. First Embodiment

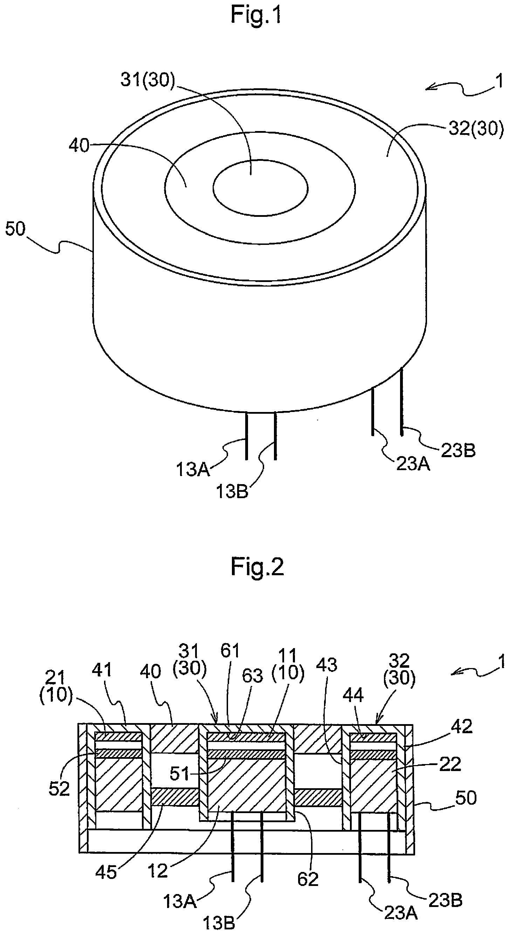

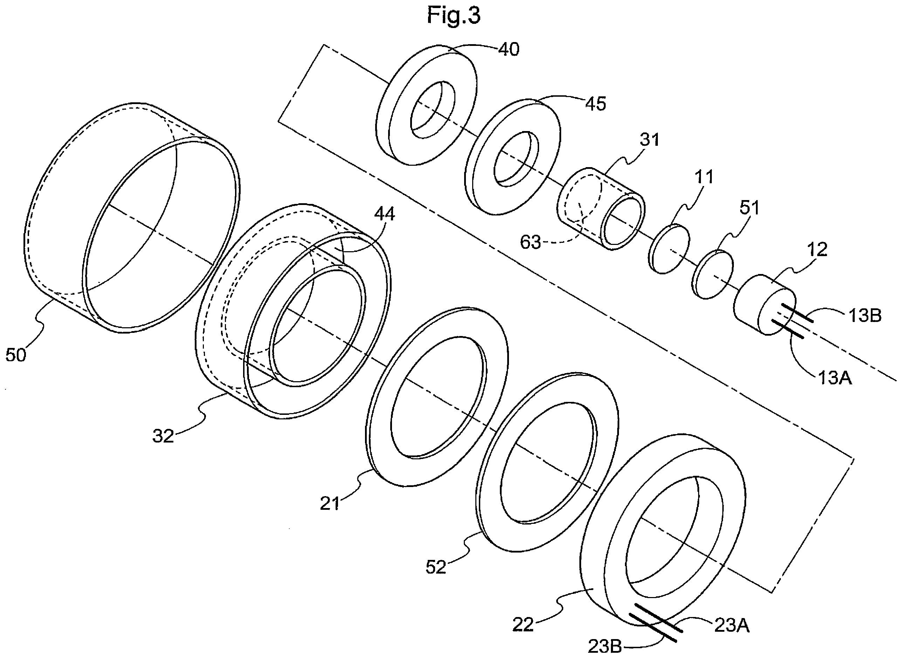

Fig. 1 shows a perspective view of the ultrasonic wave input/output device 1 according to this embodiment, and Fig. 2 shows a side view in section of the ultrasonic wave input/output device 1. Fig. 3 shows the above device as being shown exploded in its respective parts. As shown in Figs. 1-3, the ultrasonic wave input/output device 1 includes oscillation sections 10, cases 30 and a housing 50.

As the oscillation sections 10, at least two such sections are provided. In the instant embodiment, it will be explained that the oscillation sections 10 consist of two oscillation sections, i.e. a first oscillation section 11 and a second oscillation section 21. In the following discussion, when no distinction is needed between the first oscillation section 11 and the second oscillation section 21, these will be explained generically as the oscillation sections 10. Whereas, when such distinction therebetween is needed, they will be explained as the first oscillation section 11 and the second oscillation section 21, respectively.

The first oscillation section 11 outputs a ultrasonic wave having a first frequency and obtains a reflected wave corresponding to the outputted ultrasonic wave. This first frequency is preset as the frequency of the ultrasonic wave to be outputted from the first oscillation section 11. And, this first frequency is set as a frequency higher than the audible frequency range, e.g. a frequency equal to or higher than 20 kHz. The ultrasonic wave outputted from the first oscillation section 11 is propagated in the air along a predetermined direction. If an object is present in the area of the output of the ultrasonic wave, the ultrasonic wave will be reflected by such object and the resultant reflected ultrasonic wave is obtained by the first oscillation section 11 as a reflected wave. In this way, the first oscillation section 11 is used for both outputting of the ultrasonic wave and obtaining of the reflected wave. Thus, the first oscillation section 11 will be driven to repeat a period of outputting the ultrasonic wave and a period of waiting for the reflected wave, by a predetermined cycle.

Such first oscillation section 11 can be constituted by using a piezoelectric element. Driving of the first oscillation section 11 is effected by a first driving section 12. This first driving section 12 includes a pair of control terminals 13A, 13B, so that when the first oscillation section 11 is energized, the ultrasonic wave is outputted, and when the reflected wave is obtained, the first oscillation section 11 is oscillated by the reflected wave and predetermined electric signals will be outputted via the pair of control terminals 13A, 13B.

The second oscillation section 21 outputs a ultrasonic wave having a second frequency which is different from the first frequency described above and obtains a reflected wave corresponding to the outputted ultrasonic wave having the second frequency. Here, "a second frequency which is different from the first frequency" means a frequency which is preset as a frequency distinct from the first frequency and set as the frequency of the ultrasonic wave to be outputted by the second oscillation section 21. This second frequency too is set as a frequency higher than the audible frequency range, e.g. a frequency equal to or higher than 20 kHz. In particular, in this instant embodiment, the second frequency is set as a frequency lower than the first frequency.

The ultrasonic wave outputted from the second oscillation section 21 (this will be referred to as the "second ultrasonic wave"), like the ultrasonic wave outputted from the first oscillation section 11 (this will be referred to as the "first ultrasonic wave"), will propagate in the air along a predetermined direction. In this, since the second ultrasonic wave as having a longer wavelength due to its lower frequency than the first ultrasonic wave will be less attenuated in the course of its propagation in the air, so that the second ultrasonic wave can reach a distance farther than the distance reachable by the first ultrasonic wave. Thus, the second ultrasonic wave can detect an object which is present at a distance farther than the distance reachable by the first ultrasonic wave. The ultrasonic wave reflected by the object will be obtained by the second oscillation section 21 as a "reflected wave". In this manner, like the first oscillation section 11, the second oscillation section 21 too is used for both outputting of a ultrasonic wave and obtaining of a reflected wave. Thus, the second oscillation section 21 will be driven to repeat a period of outputting the ultrasonic wave and a period of waiting for the reflected wave, by a predetermined cycle.

Such second oscillation section 21 too can be constituted by using a piezoelectric element. Driving of the second oscillation section 21 is effected by a second driving section 22. This second driving section 22 includes a pair of control terminals 23A, 23B, so that when the second oscillation section 21 is energized, the ultrasonic wave is outputted, and when the reflected wave is obtained, the second oscillation section 21 is oscillated by the reflected wave and predetermined electric signals will be outputted via the pair of control terminals 23A, 23B.

The cases 30 accommodate the respective oscillation sections 10 individually. Here, the language "accommodates...individually" is understood to mean that one oscillation section 10 is disposed within one case 30. In this embodiment, as described above, the oscillation section 10 includes the first oscillation section 11 and the second oscillation section 21. Thus, in this embodiment, two cases 30 are employed. For facilitating understanding, when distinction between these two cases 30 is needed, they will be referred to as a first case 31 and a second case 32, respectively.

In this embodiment, the first case 31 includes a disc-like portion 61 and a tubular portion 62. And, also in this embodiment, the tubular portion 62 is provided as a cylindrical portion and one axial side of the tubular portion 62 is covered by the disc-like portion 61. To a top face 63 (the face facing to the inner side in the first case 31) of the disc-like portion 61, the first oscillation section 11 is attached. Advantageously, the first case 31 can be formed with using a material that can be easily oscillated by the first oscillation section 11.

Further, in the instant embodiment, the second case 32 is constituted of a disc-like portion 41, an outer vertical portion 42 extending vertically from an outer circumferential edge of the disc-like portion 41 along the axial direction of the disc-like portion 41, and an inner vertical portion 43 extending vertically from an inner circumferential edge of the disc-like portion 41 in the same direction as the outer vertical portion 42 along the axial direction of the disc-like portion 41. Thus, the disc-like portion 41, the outer vertical portion 42 and the inner vertical portion 43 together form an annular recess among them. To a top face 44 of the disc-like portion 41 (the bottom face of the annular recess), the second oscillation section 21 is attached. Therefore, the second oscillation portion 21 too can be formed annular advantageously. And, also advantageously, the second case 32 can be formed with using a material that can be easily oscillated by the second oscillation section 21.

Inside the first case 31 and on the side closer to the opening than the first oscillation portion 11, there is provided a first cushioning member 51, with forming a gap relative to the first oscillation section 11. On the opening side of this first cushioning member 51, the first driving portion 12 mentioned above is provided.

Similarly, inside the second case 32 and on the side closer to the opening than the second oscillation portion 21, there is provided an annular second cushioning member 52, with forming a gap relative to the second oscillation section 21. On the opening side of this second cushioning member 52, the second driving portion 22 mentioned above is provided.

The housing 50 houses the respective cases 30 with the cushioning members 40 being interposed therebetween. As described above, in the instant embodiment, there are provided a plurality of cases 30 and these cases 30 are all housed in the single housing 50. Therefore, since the first case 31 and the second case 32 are housed within the housing 50, with the cushioning member 40 being provided therebetween. Thus, it is possible to prevent oscillation of one of the first oscillation section 11 and the second oscillation section 21 from being transmitted to the other. Incidentally, the first case 31 and the second case 32 are fixed to each other on the opening sides thereof, via a fixing member 45.

In the instant embodiment, as shown in Fig. 1, the oscillation sections 10 and the cases 30 are formed annular. Also, advantageously, these oscillation sections 10 and the cases 30 can be arranged coaxially and in succession from radially inward to outward side in the order of descending frequency for the frequencies of the ultrasonic waves outputted from the respective oscillation sections 10. Namely, on the radially inner side, the first oscillation section 11 is disposed and the second oscillation section 21 is disposed on the radial outer side of the first oscillation section 11 and coaxially with this first oscillation section 11.

With the above-described arrangement, it is possible to make a distance from the first oscillation section 11 to an object equal to a distance from the second oscillation section 21 to this object. Therefore, even if the ultrasonic wave input/output device 1 is mounted with certain rotational displacements in the pan (horizontal) direction, the tilt (vertical) direction and the roll (axial) direction thereof, such rotational displacements can be ignored (considered negligible) for the purpose of object detection and sound output. Accordingly, mounting of the ultrasonic wave input/output device 1 can be carried out easily.

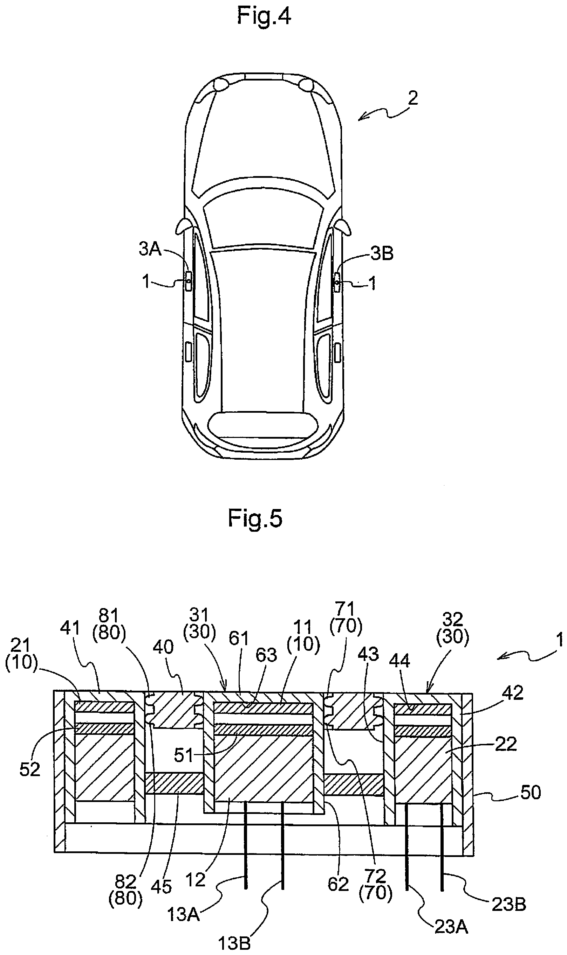

As illustrated in Fig. 4, the ultrasonic wave input/output device 1 according to the instant embodiment will be mounted to a vehicle 2 via the housing 50, such that the ultrasonic waves outputted from the oscillation sections 10 may be outputted to the periphery of this vehicle 2, for instance. In the example illustrated in Fig. 4, such ultrasonic wave input/output devices 1 are mounted to a door knob 3A of the left front door and a door knob 3B of the right front door of the vehicle 2.

The ultrasonic wave input/output device 1 configured as described above effects a cycle of outputting of ultrasonic waves to the periphery of the vehicle 2 and of obtaining of reflected waves thereof, in repetition. When the ultrasonic wave input/output device 1 obtains a reflected wave, a period from the outputting of the ultrasonic wave to the obtaining of the reflected wave will be outputted as detection result to a controlling section (not shown) via the pair of control terminals 13A, 13B or 23A, 23B, so that the controlling section will calculate the distance from the ultrasonic wave input/output device 1 to the object with using the above period and propagation speeds of the ultrasonic wave and the reflected wave.

Further, as described hereinbefore, the first frequency of the first ultrasonic wave is set higher than the second frequency of the second ultrasonic wave. Therefore, the first ultrasonic wave, due to its short wavelength, can be effectively utilized for short-distance sensing. Whereas, the second ultrasonic wave, due to its wavelength longer than that of the first ultrasonic wave, can be effectively utilized for long-distance sensing. Moreover, by driving the first oscillation section 11 and the second oscillation section 21 simultaneously to cause mutual interference between the ultrasonic waves thereof, sensing for an even longer distance than the sensing by the second ultrasonic wave will be made possible as well.

Alternatively, firstly, presence of an object in a wide spatial range can be detected by the second oscillation section 21. Then, the position of a detected object can be specified with greater details by mechanical scanning of the detection range of the first oscillation section 11.

The controlling section effects a predetermined informing to an object that is present at the calculated distance. Advantageously, this informing can be made variably, depending on whether the object (subject) is a user of the vehicle 2 or not. More particularly, if the object is equipped with an ID tag or the like for identifying the object (subject) being an (authorized) user of the vehicle 2, the control section will determine the object as such user of the vehicle 2 and can then instruct the ultrasonic wave input/output device 1 to output a "friendly informing (message)" (e.g. saying "welcome" to the user") to this user. Advantageously, in response to such instruction, the first driving section 12 or the second driving section 22 inputs an audio signal (a voice of welcoming the user) to the oscillation section 10 corresponding thereto to cause this oscillation section 10 to oscillate, so that informing may be made (a voice/sound may be outputted) in a spot-like manner (in a beam-like narrow area) to the position where the user is present.

On the other hand, in the case of absence of such ID tag or the like identifying the object as a user of the vehicle 2, the control section determines that the object is a suspicious person (a suspect intruder) to the vehicle 2 and then instructs the ultrasonic wave input/output device 1 to output informing of an alarm to this object (a suspicious person). Advantageously, in response to such instruction, the first driving section 12 or the second driving section 22 inputs an audio signal (e.g. an alarm sound/voice) to the oscillation section 10 corresponding thereto to cause this oscillation section 10 to oscillate, so that informing may be made (an alarm output may be made) in a spot-like manner (in a beam-like narrow area) to the position where the suspicious person is present.

The above informing may be made in the form of output of a sound/voice or an alarm in the spot-like manner (in a local manner) by the first oscillating section 11 to the object whose position has been identified by the first oscillation portion 11 as described above. Alternatively, the reporting may be made in the form of output of a sound/voice or an alarm for a wide area by the second oscillation section 21.

Such spot-like informing is possible with using, as the ultrasonic wave input/output device 1, a known parametric speaker (an ultra-directional speaker) capable of sending a sound only to a limited area. Such parametric speaker can be realized by transmitting/outputting a sound/voice (an audible sound) with using the ultrasonic wave as the carrier wave. As its principle is known (see e.g. http://star.web.nitech.ac.jp/pdf/120324doc.pdf), explanation thereof will be omitted herein.

In this way, this ultrasonic wave input/output device 1 outputs a ultrasonic wave in a predetermined direction, so that when a reflected wave thereof reflected by a person approaching the vehicle 2 is inputted, such person can be detected. By outputting a sound/voice to a person with using a ultrasonic wave from the ultrasonic wave input/output device 1 as the carrier wave, informing can be made in the spot-like manner to the person.

### 2. Second Embodiment

Next, a second embodiment will be explained. In the first embodiment described above, it was explained that the first case 31 and the second case 32 are housed within the housing 50, with the cushioning member 40 being interposed therebetween. The shape of this cushioning member 40 differs between the first embodiment and the second embodiment. In the first embodiment, no projections projecting radially are provided in the inner circumferential face or in the outer circumferential face of the cushioning member 40, so that the outer circumferential face of the cushioning member 40 comes into contact with the inner vertical portion 43 and the inner circumferential face of the cushioning member 40 comes into contact with the tubular portion 62. Whereas, in the instant embodiment, such projections projecting radially are provided in the inner circumferential face of and in the outer circumferential face of the cushioning member 40, respectively. The rest of the configuration is identical to that of the first embodiment, so explanation thereof will be omitted herein.

Fig. 5 shows a side view in section of a ultrasonic wave input/output device 1 relating to the second embodiment. A cushioning member 40 included in the ultrasonic wave input/output device 1 according to this embodiment includes, in its inner circumferential face, an inward projection 70 which is formed annular and projects from this inner circumferential face to the radially inner side to come into contact with the tubular portion 62, and includes, in its outer circumferential face, an outward projection 80 which is formed annular and projects from this outer circumferential face to the radially outer side to come into contact with the inner vertical portion 43. The inward projection 70 includes a plurality of projections along the axial direction and, in this embodiment, includes a first inward projection 71 and a second inward projection 72 along the axial direction of the cushioning member 40. Further, the outward projection 80 includes a plurality of projections along the axial direction and, in this embodiment, includes a first outward projection 81 and a second outward projection 82 along the axial direction of the cushioning member 40. Therefore, in the instant embodiment, the first inward projection 71 and the second inward projection 72 come into contact with the tubular portion 62 and the first outward projection 81 and the second outward projection 82 come into contact with the inner vertical portion 43.

In the instant embodiment, with using the cushioning member 40 having the above-described shape, the first case 31 and the second case 32 are held within the housing 50. Namely, by using the cushioning member 40 having such inward projection 70 and the outward projection 80, when the first oscillation section 11 and the second oscillation section 21 are driven simultaneously, it is possible to lessen transmission of oscillation therebetween and to cause the first oscillation section 11 and the second oscillation section 21 when driven simultaneously to oscillate together as a whole. In this way, the cushioning member 40 according to this embodiment, thanks to the inward projection 70 and the outward projection 80 thereof, realizes the characterizing arrangement and functionality. Incidentally, in this embodiment, it has been described that the cushioning member 40 includes the inward projection 70 and the outward projection 80. Instead, the cushioning member 40 can include only the inward projection 70. Further alternatively, the cushioning member 40 can include only the outward projection 80. Namely, it is possible for the cushioning member 40 to include at least one of the inward projection 70 and the outward projection 80.

### 3. Other Embodiments

In the foregoing embodiments, it was explained that the oscillation section 10 consists of the first oscillation section 11 and the second oscillation section 21. Instead, the oscillation section 10 can consist of three or more oscillation sections. In such case, the cases 30 too will be provided by three or more. Then, the present invention may be implemented by hosing these within the single housing 50.

In the foregoing embodiments, it was explained that the oscillation sections 10 and the cases 30 are formed annular and these are arranged coaxially and in succession from radially inward to outward side in the order of descending frequency for the frequencies of the ultrasonic waves outputted from the respective oscillation sections 10. Instead of this, the oscillation sections 10 and the cases 30 can be provided in a non-annular shape. Further alternatively, when the oscillation sections 10 and the cases 30 are formed annular, these may be arranged coaxially and in succession from radially inward to outward side in the order of ascending frequency for the frequencies of the ultrasonic waves outputted from the respective oscillation sections 10.

In the foregoing embodiments, there was explained the example in which the ultrasonic wave input/output device 1 includes one housing 50. Instead, the device 1 can include a plurality of such housings 50 housing the oscillation sections 10 and the cases 30 respectively, and these plural housings 50 may be arranged in the form of an array (the plurality of housings 50 are arranged side by side) for use. With this arrangement, it is possible to provide a phase difference between the ultrasonic waves outputted from the oscillation sections 10 of a same frequency provided in housings 50 adjacent each other, thus causing mutual interference therebetween for enabling control of the directivity of the ultrasonic wave. On the other hand, in the case of informing to an object, the linearity can be improved and also the volume of the sound or voice used for informing can be increased.

In the foregoing embodiment, it was explained with reference to Fig. 4 that the ultrasonic wave input/out devices 1 are mounted to the door knob 3A of the left front door and the door knob 3B of the right front door of the vehicle 2. Instead, the device 1 may be mounted to only one of the door knob 3A of the left front door and the door knob 3B of the right front door of the vehicle 2. Or, it may be mounted to at least one of a left door mirror and a right door mirror. Further alternatively, it may be mounted to a garnish (e.g. a side garnish), etc. Still alternatively, it may be mounted to a predetermined position inside a vehicle cabin, so that outputting of a ultrasonic wave and obtaining of a reflected wave may be effected through the window.

In the foregoing embodiments, there was explained the example in which the ultrasonic wave input/output device(s) 1 is/are mounted to the vehicle 2. Alternatively, the ultrasonic wave input/output device(s) 1 may be attached to a door, a window or a vicinity thereof in a building. Further, it may be used for security monitoring of an article (e.g. a work of art).

In the second embodiment described above, it was explained that the inward projection 70 includes a plurality of projections along the axial direction and the outward projection 80 includes a plurality of projections along the axial direction. Instead, the inward projection 70 and the outward projection 80 respectively includes one projection. Further alternatively, one of the inward projection 70 and the outward projection 80 may include a plurality of projections and the other may include one projection only.

### Industrial Applicability

The present invention can be used in a ultrasonic wave input/output device configured to output a ultrasonic wave and to obtain a reflected wave corresponding to the outputted ultrasonic wave.

### Description of Reference Marks/Numerals

- 1:: ultrasonic wave input/output device
- 2:: vehicle
- 10:: oscillation section
- 11:: first oscillation section
- 21:: second oscillation section
- 30:: case
- 40:: cushioning member
- 50:: housing

## Claims

1. A ultrasonic wave input/output device comprising:
at least two oscillation sections including a first oscillation section configured to output a ultrasonic wave having a first frequency and to obtain a reflected wave corresponding to the outputted ultrasonic wave and a second oscillation section configured to output a ultrasonic wave having a second frequency different from the first frequency and to obtain a reflected wave corresponding to the outputted ultrasonic wave having the second frequency;
cases accommodating the first and second oscillation sections individually therein; and
a single housing that houses the respective cases with a cushioning member therebetween.

2. The ultrasonic wave input/output device of claim 1, wherein the oscillation sections and the cases respectively have annular shapes and are arranged coaxially and in succession from radially inward to outward side in the order of descending frequency for the frequencies of the ultrasonic waves outputted from the respective oscillation sections.

3. The ultrasonic wave input/output device of claim 1 or 2,
wherein the device includes a plurality of the housings each accommodating the oscillation sections and the cases, and the plurality of housings are arranged in the form of an array.

4. The ultrasonic wave input/output device of any one of claims 1-3, wherein the device is mounted to a vehicle via the housing so that the ultrasonic waves outputted from the oscillation sections may be outputted to the periphery of the vehicle.
